# EUROPEAN PATENT APPLICATION

(11) **EP 4 765 531 A1**
(43) Date of publication of application: **24.06.2026**
(21) Application number: 24853017.2
(22) Date of filing: 10.07.2024
(51) Int. Cl.: H02G 5/08, H02B 1/46, H02B 1/48, H02B 1/20

(54) **POWER DISTRIBUTION APPARATUS ALLOWING FOR STEP-BY-STEP POWER DRAWING**

(30) Priority: 15.08.2023 CN 202311024085
(71) Applicant: Huizhou Clever Electronic Co., Ltd., Huizhou, Guangdong 516000 (CN)
(72) Inventor: HU, Xiaoxian, Guangdong 516000 (CN); FENG, Lianhua, Guangdong 516000 (CN); HUANG, Tingting, Guangdong 516000 (CN)
(74) Representative: Lang, Christian
(86) International application number: PCT/CN2024/104611
(87) International publication number: WO 2025/036029

(57) **Abstract**

A power distribution apparatus allowing for step-by-step power drawing is provided. The power distribution apparatus is provided with a main case; a step-by-step power drawing mechanism and a control mechanism are disposed in the main case; a snap-fit mechanism is disposed on the outer side of the main case; the main case is clamped on a bus duct by means of the snap-fit mechanism; the step-by-step power drawing mechanism is connected to the bus duct to draw power and is electrically connected to an electrical device by means of a plurality of power sockets or industrial electrical connectors for power outputting; the control mechanism is electrically connected to the step-by-step power drawing mechanism, and performs safety control on the power drawing and outputting process. The apparatus of the present invention can be simply, conveniently and quickly clamped to the bus duct to achieve plug-in power drawing from the bus duct, and can also implement safety control on the power drawing and current outputting process, so that higher usage efficiency and safer usage are achieved.

## Description

### Field of the Invention

The present disclosure relates to a power distribution system for distributing power to devices such as a PDU, and in particular relates to a power distribution apparatus allowing for step-by-step power drawing that can be clamped to a bus duct.

### Background of the Invention

Bus trunk-line power distribution apparatuses or bus ducts are widely utilized in power distribution systems for low-voltage assembled switchgear and control gear, and are configured to replace electric cables and lines for distributing power to electrical devices(i.e., loads), such as high-rise buildings, factories, Internet data center (IDC) facilities, power distribution units (PDUs), and the like. Existing bus ducts are new-type conductors formed by using copper or aluminum as the conductor which is supported by an insulator and then installed in a metal groove, and this has become an indispensable wiring method in power systems currently. When the bus duct is in use, it is required to connect the bus duct with the electrical device. In existing methods, a plug-in connector and a distribution box are used for power drawing and outputting, or a socket is used for power drawing. However, existing methods and apparatuses have a low degree of integration, and lack convenience in installation and use as well as reliability and safety in connection.

### Summary of the Invention

In order to solve the above problems, the present disclosure provides a power distribution apparatus allowing for step-by-step power drawing, which can be conveniently and quickly clamped to the bus duct, draw power by means of a flexibly operable step-by-step power drawing mechanism, and can distribute power obtained from the bus duct to electrical devices in many ways, and the apparatus has a high degree of integration and reliable connection and is safe to use.

In order to achieve the above objective, the present disclosure provides a power distribution apparatus allowing for step-by-step power drawing. The power distribution apparatus is provided with: a main case, a step-by-step power drawing mechanism and a control mechanism which are disposed in the main case, a snap-fit mechanism which is disposed at an outer side of the main case, and a bus duct to which the main case is clamped via the snap-fit mechanism, wherein the step-by-step power drawing mechanism is connected to the bus duct for power drawing and is electrically connected to an electrical device via multiple power sockets or industrial electrical connectors for power outputting, and the control mechanism is electrically connected to the step-by-step power drawing mechanism to perform safety control on a power drawing and outputting process.

A concealed power socket configured to connect the electrical device is disposed on a front panel of the main case and is concealed at a back side of an openable and closable outer cover, and the main case is provided at a top thereof with a window for an upper end of the step-by-step power drawing mechanism to extend out.

The bus duct is provided with a duct body, two ends and a bottom of which are open, wherein a protruding edge, configured to connect with the snap-fit mechanism, is provided at an outer side of the duct body in a length direction, and several insulating sheaths are disposed at an interval in the duct body in a width direction, wherein one first electrically conductive plate is disposed in each insulating sheath, and multiple first electrically conductive plates are arranged to form a first electrically conductive plate assembly, with two ends of the first electrically conductive plates extending beyond two ends of the insulating sheath.

The snap-fit mechanism is provided with two snap-fit boxes which are symmetrically fixed on upper ends of two sides of the main case, wherein each of the two snap-fit boxes is provided therein with a first claw groove, a second claw groove, and a spring groove and is provided with a first claw and a second claw which are extendable and retractable, are symmetrically disposed at two sides in a width direction, and are respectively connected to a first return spring; wherein the snap-fit box is provided, at a lower portion, with a first claw opening and closing key and a second claw opening and closing key which are symmetrically disposed and are movable laterally, and are respectively provided thereon with a first guiding groove and a second guiding groove; and wherein the snap-fit box is provided, at two sides, with claw release buttons which are movable vertically and are provided thereon with first limiting protrusions, and second limiting protrusions, which cooperate with the first limiting protrusions for limiting, are respectively disposed on the first claw and the second claw.

The first claw and the second claw are respectively disposed in the first claw groove and the second claw groove in the two snap-fit boxes, and the first return spring is disposed in the spring groove; the first claw and the second claw have an inverted L-shape and are provided at an end with vertical protrusions and lateral protrusions which are formed by bending at a right angle, and the vertical protrusions are respectively inserted into the first guiding groove and the second guiding groove on the first claw opening and closing key and the second claw opening and closing key; the first guiding groove and the second guiding groove each have a length that is greater than a length of each of the vertical protrusions of the first claw and the second claw, so that the vertical protrusions are respectively movable in the first guiding groove and the second guiding groove to move the first claw and the second claw by pushing; the two lateral protrusions are positioned at two ends of the spring groove, and two ends of the first return spring are connected to the two lateral protrusions; and free ends of the first claw and the second claw extend beyond the snap-fit box, and hooks bending inward are respectively disposed at end portions of the free ends.

The first claw opening and closing key and the second claw opening and closing key are symmetrically disposed in notches at two sides of a lower portion of the snap-fit box, and are separated by a partition plate in the middle; a second return spring is mounted in a spring hole in the partition plate, and two ends of the second return spring are respectively connected to the first claw opening and closing key and the second claw opening and closing key; when the first claw opening and closing key and the second claw opening and closing key are pushed inward, the first claw and the second claw extend outward; and by placing the first claw and the second claw on the protruding edge of the bus duct and releasing the first claw opening and closing key and the second claw opening and closing key, the hooks may be locked on the protruding edge .

The step-by-step power drawing mechanism is disposed at an upper portion on one side in the main case, and includes a power drawing part configured to connect to the bus duct and an operation part configured to perform a power drawing operation.

The power drawing part includes several second electrically conductive plates, several insulating plates and a fixation base, wherein the several second electrically conductive plates are connected to multiple insulating plates, and upper ends of the second electrically conductive plates abut against elastic electrically conductive copper plates on one side of the insulating plates; several second electrically conductive plates and the elastic electrically conductive copper plates are arranged in a width direction of the main case to form a second electrically conductive plate assembly which corresponds to the first electrically conductive plate assembly in the bus duct; the second electrically conductive plate assembly, the multiple insulating plates, and multiple elastic electrically conductive copper plates are disposed on the fixation base which is disposed on a support connected to the main case; and an upper end of the second electrically conductive plate assembly extends out of the main case.

The operation part is connected to a lower side of the power drawing part and is provided with a link mechanism which drives the power drawing part to move vertically; the link mechanism is connected to a connection base which is fixed to a side wall of the main case; an input end of the link mechanism is connected to the operation handle, and a body of the operation handle extends to an exterior of the main case; an output end of the link mechanism is connected to a vertical lifting rod, and an upper end of the lifting rod is fixed to the support; two guiding posts are fixed on the support, and the two guiding posts extend upward and enter the support; and the support is movable vertically along the two guiding post sunder the action of the lifting rod, so that the second electrically conductive plate assembly is plugged into the first electrically conductive plate assembly in the bus duct for power drawing or is disconnected from the first electrically conductive plate assembly in the bus duct.

The link mechanism includes one driving link and two pairs of driven links, wherein the driving link includes three arms, wherein a first arm thereof is articulated to the operation handle and is configured to rotate around a first pin shaft fixed to a side wall of the connection base, a second arm is positioned in a limiting groove at a top of the connection base, and an end of a third arm is articulated to the two pairs of driven links via a second pin shaft; an end of the driven link is articulated to a third pin shaft, and the other end of the driven link is articulated to the lifting rod of the operation part; and when the operation handle is pressed down or lifted up, the link mechanism moves the lifting rod vertically by pushing, so that the second electrically conductive plate assembly of the power drawing mechanism is plugged into the first electrically conductive plate assembly in the bus duct for power drawing or is disconnected from the first electrically conductive plate assembly in the bus duct.

The control mechanism includes a control unit, a power drawing unit, an output unit, and a monitoring module, wherein the monitoring module is integrated with a switching power supply, a current collection unit, a voltage collection unit, a monitoring unit, a communication interface unit, and a display screen; the control unit is a circuit breaker, which is connected to the power drawing unit and the output unit; the power drawing unit is electrically connected to the power drawing part of the step-by-step power drawing mechanism; the output unit is electrically connected to the power socket or the industrial electrical connector; the switching power supply is connected between the power drawing unit and the control unit; the current collection unit and the voltage collection unit are connected between the control unit and the output unit, and the current collection unit and the voltage collection unit are respectively electrically connected to the power drawing part of the step-by-step power drawing mechanism and are further respectively electrically connected to the monitoring unit; and the monitoring unit is a single chip, which is connected to the switching power supply, the communication interface unit, and the display screen respectively.

The contribution of the present disclosure lies in that the problem of plug-in power drawing in a bus duct type power distribution system is effectively solved. The apparatus of the present disclosure can be simply, conveniently and quickly clamped to the bus duct to achieve plug-in power drawing from the bus duct. By disposing a step-by-step power drawing mechanism, which integrates clamping and power drawing, is disposed, quick connection to the bus duct can be realized, and step-by-step power drawing mechanism is highly adaptable to and can be reliably connected to a conductive member of the bus duct, and plug-in connection and power drawing operations are simple, convenient, and quick. Besides, the apparatus of the present disclosure is provided with a control mechanism, which can perform safety control on a power drawing and current outputting process, so that higher usage efficiency and safer usage can be achieved.

### Brief Description of the Drawings

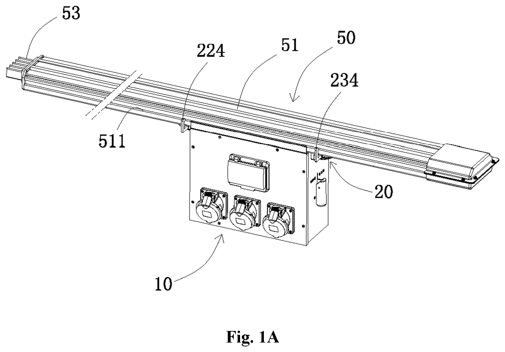

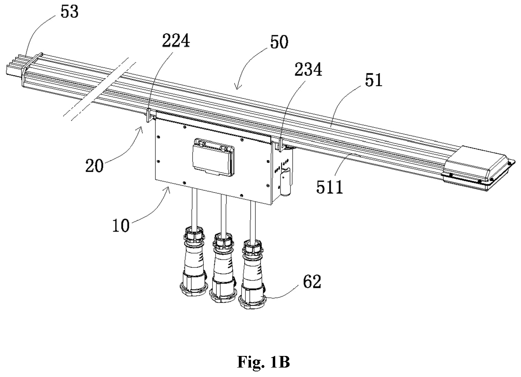

Fig. 1 is a perspective schematic view of an integral structure of the present disclosure, in which Fig. 1A is a perspective schematic view of an output end which is a power socket, and Fig. 1B is a perspective schematic view of an output end which is an industrial electrical connector.

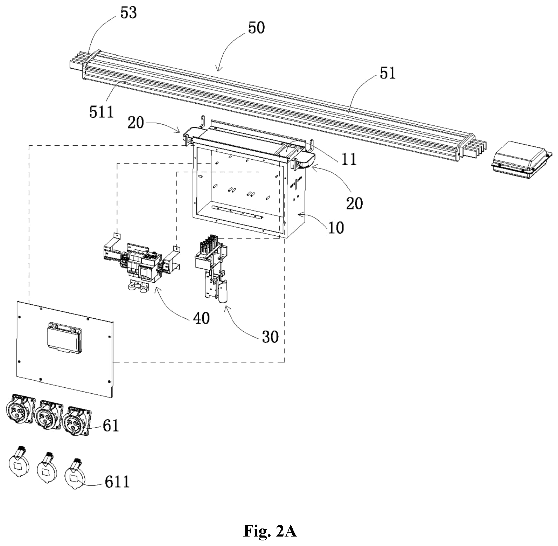

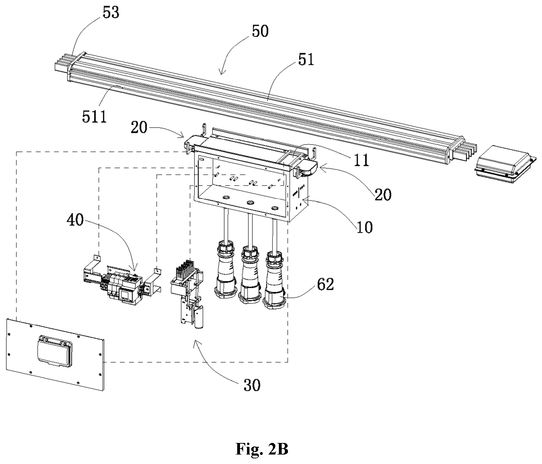

Fig. 2 is an exploded perspective schematic view of components of the integral structure of the present disclosure, in which Fig. 2A is an exploded schematic view of components of the output end which is a power socket, and Fig. 2B is an exploded schematic view of components of the output end which is an industrial electrical connector.

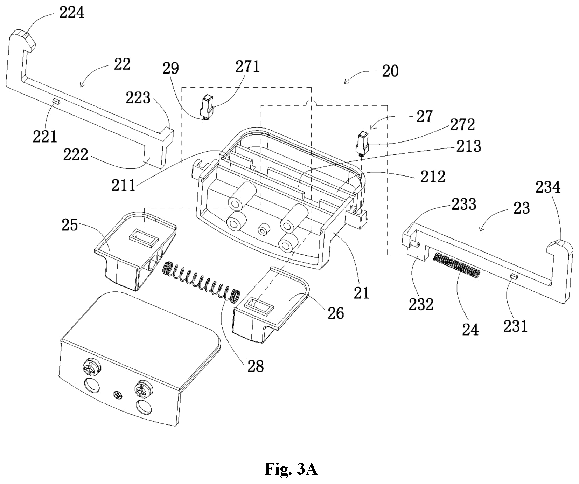

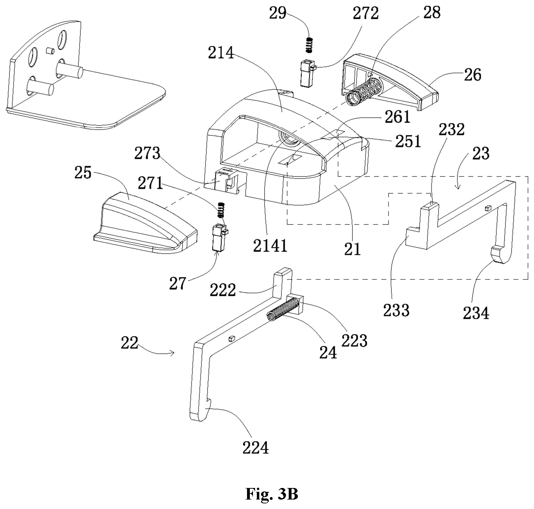

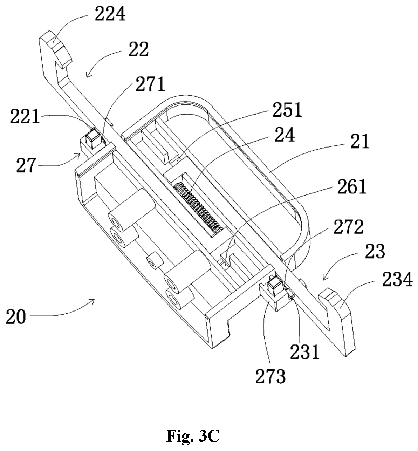

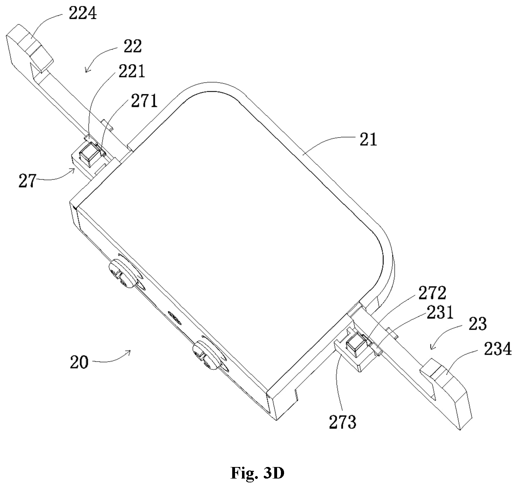

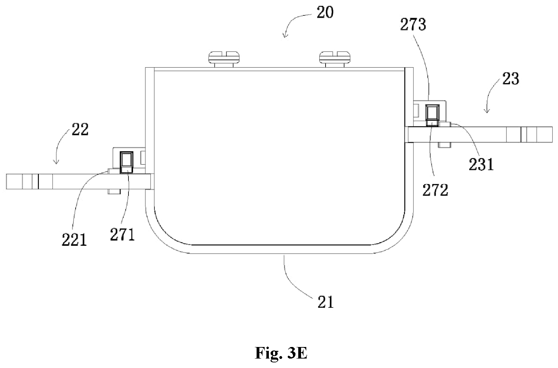

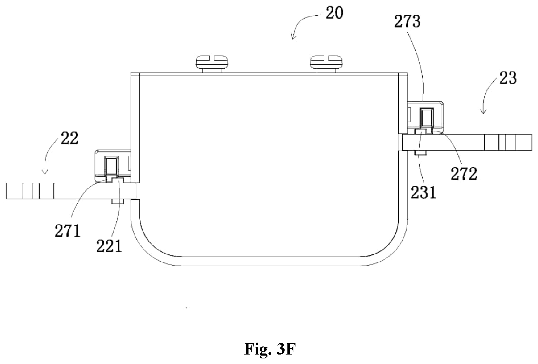

Fig. 3 is a schematic view of a structure of a snap-fit mechanism, in which Fig. 3A is an exploded perspective schematic view of components on an upper side of the snap-fit mechanism, Fig. 3B is an exploded perspective schematic view of components on a lower side of the snap-fit mechanism, Fig. 3C is a perspective schematic view of the snap-fit mechanism with an upper cover removed, Fig. 3D is a perspective schematic view of a claw release button, Fig. 3E is a schematic view of a claw in an extended state, and Fig. 3F is a schematic view of a claw in a contracted state.

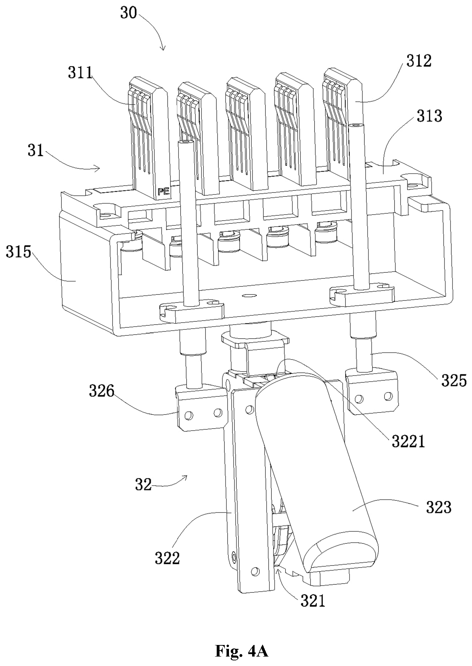

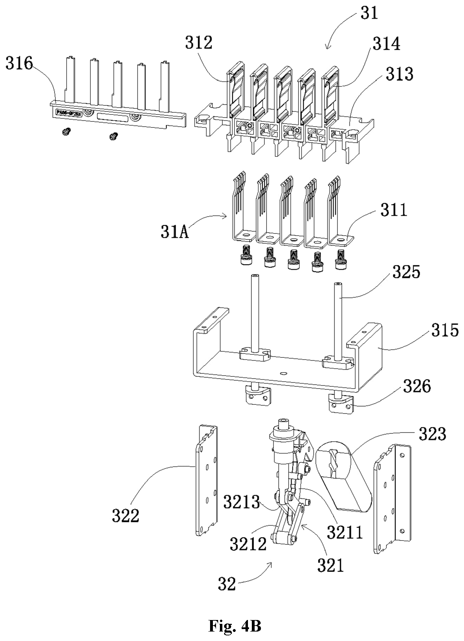

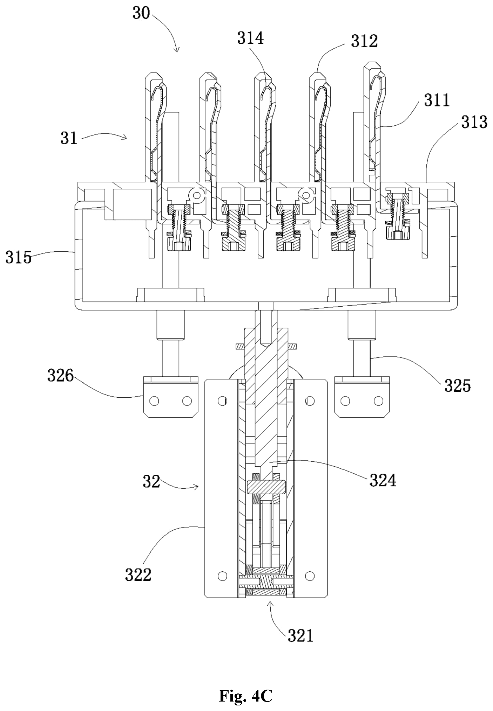

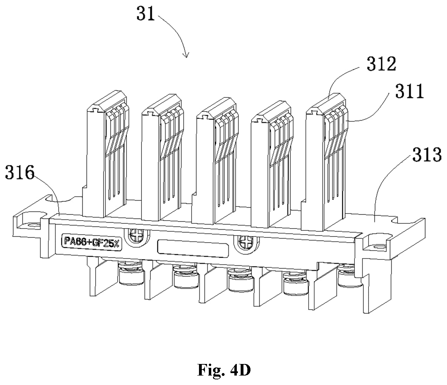

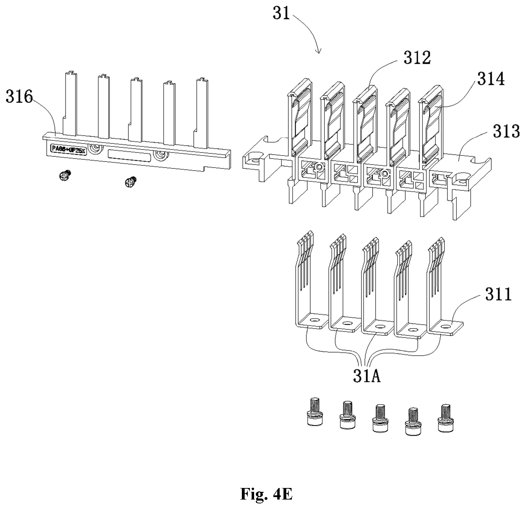

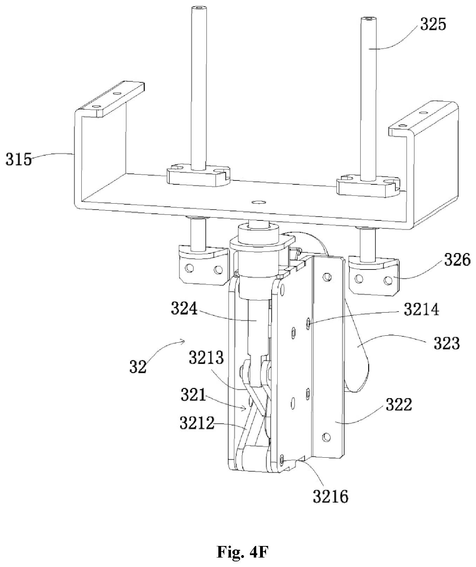

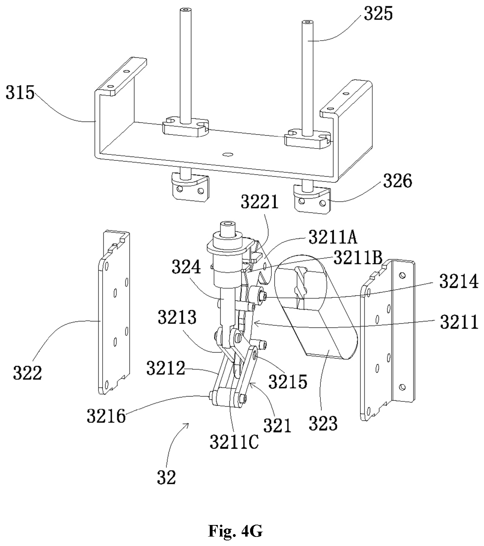

Fig. 4 is a schematic view of a structure of a step-by-step power drawing mechanism, in which Fig. 4A is a perspective schematic view of an integral structure, Fig. 4B is an exploded perspective schematic view of components, Fig. 4C is a sectional view of the structure, Fig. 4D is a perspective schematic view of a structure of a power drawing part, Fig. 4E is an exploded perspective schematic view of components of the power drawing part, Fig. 4F is a perspective schematic view of a structure of an operation part, and Fig. 4G is an exploded perspective schematic view of components of the operation part.

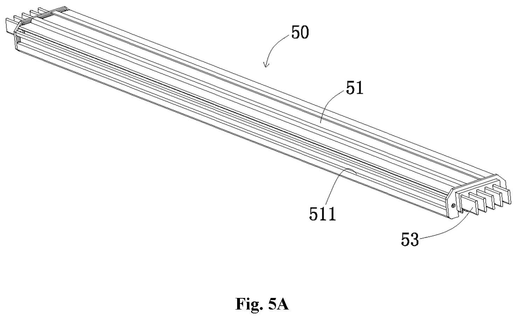

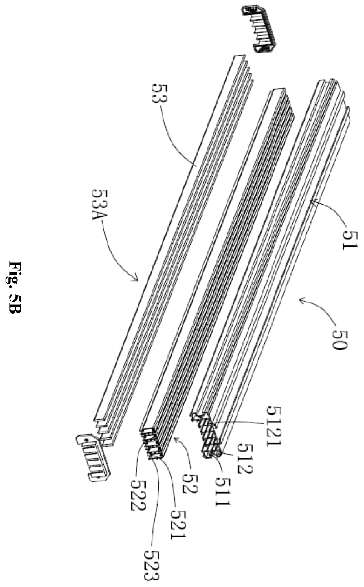

Fig. 5 is a schematic view of a structure of a bus duct of the present disclosure, in which Fig. 5A is a perspective schematic view, and Fig. 5B is an exploded perspective schematic view of components.

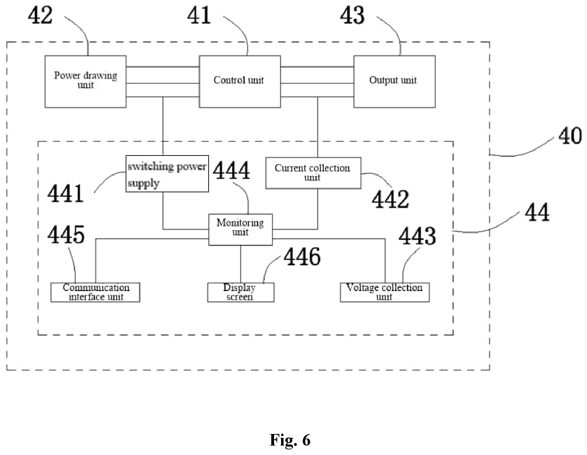

Fig. 6 is a block diagram of a circuit of a control mechanism of the present disclosure.

### Detailed Description of the Embodiments

The following embodiments are further explanations and description of the present disclosure, and do not constitute any limitation on the present disclosure.

Referring to Fig. 1 to Fig. 3, a power distribution apparatus allowing for step-by-step power drawing of the present disclosure includes a main case 10, a snap-fit mechanism 20, a step-by-step power drawing mechanism30, a control mechanism 40, and a bus duct 50. The main case 10 is provided thereon with the snap-fit mechanism 20,which is clamped to the bus duct 50, and the step-by-step power drawing mechanism 30, which is plugged in the bus duct 50 for power drawing. The control mechanism 40 performs power distribution and safety control on power delivery and outputting from the bus duct. The present disclosure is described in a more detailed manner below with reference to accompanying drawings.

As shown in Fig. 1, Fig. 2, and Fig. 5, the main case 10 is positioned at a lower portion of the bus duct 50, and is provided therein with the step-by-step power drawing mechanism 30and the control mechanism 40. In an embodiment shown in Fig. 1A and Fig. 2A, several power sockets 61for power outputting are disposed on a front side of the main case 10. In the present embodiment, the power socket 61 is a concealed power socket, and several power sockets 61 are disposed on a front panel of the main case 10and are concealed at a back side of an openable and closable outer cover 611, and are configured for connecting end electrical devices such as a PDU. In another embodiment shown in Fig. 1B and Fig. 2B, several industrial electrical connectors 62 for power outputting are disposed at the lower portion of the main case 10. A user may select a suitable power socket 61 or a suitable industrial electrical connector 62 according to needs. The main case 10 is provided at a top thereof with a window 11 for an upper end of the step-by-step power drawing mechanism 30 to extend out. The main case 10 is provided at a side with a hole for an operation handle of the step-by-step power drawing mechanism 30 to extend out.

As shown in Fig. 5A to Fig. 5B, the bus duct 50 is provided with a duct body 51, two ends and a bottom of which are open. The duct body 51 is made of an aluminum alloy material. The open bottom of the duct body 51is configured for electrical plug-in connection of a first electrically conductive plate assembly 53A in the duct body 51 and a second electrically conductive plate assembly 31A of the step-by-step power drawing mechanism 30.Aprotruding edge 511 is provided at two outer sides of the duct body 51 in a length direction, and is configured to connect with the snap-fit mechanism 20.Several vertical partition plates 512 are disposed in the duct body 51 in a width direction, and an upper end of the vertical partition plate 512 is connected to a top of the duct body 51. Three inner steps 5121, which protrude inside and extend from one end of the vertical partition plate 512 to the other end of the vertical partition plate 512, are disposed at an interval on a side of one of respective vertical partition plates 512. One insulating sheath 52 is disposed in each cavity formed by every two adjacent vertical partition plates 512. The insulating sheath 52 is a sleeve-shaped body with an open bottom. An arc-shaped groove 521,whichbends toward an inner side, is disposed at a lower end inside the insulating sheath and is configured for placing a first electrically conductive plate 53. An end of the insulating sheath expands outward to facilitate insertion of the second electrically conductive plate assembly 31A of the step-by-step power drawing mechanism. A limiting baffle 522, which extends from one end to the other end, is connected to a top inside the insulating sheath and corresponds to an edge of the arc-shaped groove 521. An outer step 523, which protrudes outward, is disposed on one outer side of the insulating sheath, and the insulating sheath52 is made of a flame-retard ant insulating material. The insulating sheath 52 is supported, by the outer step 523 thereof, on the inner step 5121 of the vertical partition plate 512. One first electrically conductive plate 53 is disposed in each of the insulating sheath 52, and an upper end and a lower end of the first electrically conductive plate 53 are respectively limited by the limiting baffle 522 and the arc-shaped groove 521. The first electrically conductive plate 53 is a bar-shaped copper plate, and an input end thereof is electrically connected to an external power distribution device, such as a power distribution cabinet. Multiple first electrically conductive plates 53are arranged to form the first electrically conductive plate assembly 53A.One end of each first electrically conductive plate 53extends out of the insulating sheath 52and is connected to a device such as the power distribution cabinet, and the other end of each first electrically conductive plate 53 extends beyond the insulating sheath 52 so as to electrically connect to another bus duct or is closed by an end cover.

The snap-fit mechanism 20 is disposed at an outer side of the main case 10, and the main case 10 is clamped to the bus duct 50 via the snap-fit mechanism 20.

Specifically, as shown in Fig. 3A to Fig. 3F, the snap-fit mechanism 20 includes a snap-fit box 21, a first claw 22, a second claw 23, a first return spring 24, a first claw opening and closing key 25, a second claw opening and closing key 26, and a claw release button 27. Two snap-fit boxes 21 are symmetrically fixed on upper ends of two sides of the main case 10, and the snap-fit mechanism 20isdisposed on two snap-fit boxes 21 respectively, and each of the two snap-fit boxes 21 are provided therein with a first claw groove 211, a second claw groove 212, and a spring groove 213. The first claw 22 and the second claw 23are symmetrically disposed on each snap-fit box 21 in a width direction, and the first claw 22 and the second claw 23 are movable and are extendable and retractable in the width direction of the snap-fit box 21. The first claw 22 and the second claw 23are respectively disposed in the first claw groove 211 and the second claw groove 212 of each of the two snap-fit boxes 21, and the first return spring 24 is disposed in the spring groove 213. The first claw opening and closing key 25 and the second claw opening and closing key 26 are respectively provided thereon with a first guiding groove 251 and a second guiding groove 261.The first claw 22 and the second claw 23 have an inverted L-shape and respectively have vertical protrusions 222, 233 and lateral protrusions 223, 233 which are formed on an end by bending at a right angle. The vertical protrusion 222 of the first claw is inserted into the first guiding groove 251 on the first claw opening and closing key, and the vertical protrusion 232 of the second claw is inserted into the second guiding groove 261 on the second claw opening and closing key. The first guiding groove 251 and the second guiding groove 261each have a lateral length that is greater than a lateral length of each of the vertical protrusions 222, 233 of the first claw and the second claw, so that the vertical protrusions 222, 233are respectively movable in the first guiding groove 251 and the second guiding groove 261 to move the first claw 22 and the second claw 23 by pushing, there by clamping to or disconnecting from the bus duct 50. Two lateral protrusions 223, 233 of the first claw 22 and the second claw 23 are positioned at two ends of the spring groove 213, and two ends of the first return spring 24 are connected to the two lateral protrusions 223, 233. Free ends of the first claw 22 and the second claw 23 extend beyond the snap-fit box 21, and hooks 224, 234 bending inward are respectively disposed at end portions of the free ends of the first claw 22 and the second claw 23and are configured to clamp to the protruding edge 511 of the bus duct. Second limiting protrusions 221, 231 having a block shape are respectively disposed on a claw arm of the first claw 22and a claw arm of the second claw 23. The second limiting protrusions 221, 231cooperate with first limiting protrusions 271, 272 on the claw release buttons 27, so as to limit the first claw 22 and the second claw 23 as well as the claw release button 27. The first claw opening and closing key 25 and the second claw opening and closing key 26 are symmetrically disposed in notches at two sides of a lower portion of the snap-fit box 21, and are separated by a partition plate 214 in the middle. A second return spring 28 is mounted in a spring hole 2141 in the center of the partition plate 214, and two ends of the second return spring 28 are respectively connected to the first claw opening and closing key 25 and the second claw opening and closing key 26, for the return of the two opening and closing keys. Claw release buttons 27, which are movable vertically, are respectively disposed at two sides of the snap-fit box 21.As shown in Fig. 3D, the claw release button 27 is a rectangular block which has a narrow upper portion and a wide lower portion, and the first limiting protrusions 271, 272 are respectively disposed at one side of the upper portion of the claw release buttons 27. A vertical spring hole is disposed in the center of the claw release button 27, and a third return spring 29 is disposed in the spring hole. The two claw release buttons 27 are respectively mounted in button holders 273, and the button holders 273are respectively fixed on the snap-fit box 21at one side of the first claw 22 and the second claw 23. The button holder 273 is provided therein with a protruded notch, and the lower portion of the claw release button 27 is movably disposed in a lower notch and may move vertically in the notch. The claw release buttons 27are respectively provided thereon with the first limiting protrusions 271, 272 which cooperate with the second limiting protrusions 221, 231 on the claw arms, and the first limiting protrusions 271, 272 extend beyond the notch of the button holders 273.As shown in Fig. 3E and Fig. 3F, when the first claw 22 and the second claw 23 are in a retracted state, the second limiting protrusions 221, 231 on the claw arms are located above the first limiting protrusions 271, 272 on the claw release buttons 27, and at this time the claw release buttons 27 are unable to move vertically. When it is about to clamp the step-by-step power drawing mechanism 30 to the bus duct 50, the first claw opening and closing key 25 and the second claw opening and closing key 26 may be pushed inward, and the first claw opening and closing key 25 and the second claw opening and closing key 26 push the first claw 22 and the second claw 23 via the vertical protrusions 222, 232 of the first claw 22 and the second claw 23, so that thefirst claw 22 and the second claw 23 extend outward. At this time, the second limiting protrusions 221, 231 of the first claw 22 and the second claw 23 move to outer sides of the first limiting protrusions 271, 272 on the claw release buttons 27, and the claw release buttons 27are released from the limit and spring upward. When the claw release buttons 27 are pressed down and the first claw opening and closing key 25 and the second claw opening and closing key 26 are released, the first claw 22 and the second claw 23 move toward each other, and the hooks 224, 234 of the first claw 22 andthe second claw 23 are locked on the protruding edge 511 of the bus duct, so that the step-by-step power drawing mechanism 30 is clamped to the bus duct 50. In this way, a first step of step-by-step power drawing is completed.

The step-by-step power drawing mechanism 30 clamped to the bus duct is configured to realize a step-by-step power drawing function including clamping and power drawing, monitor a power transmission process from the bus duct, and collect, transmit and display current and voltage data from a conductor of the bus duct.

Specifically, as shown in Fig. 4A to Fig. 4E, the step-by-step power drawing mechanism 30 is disposed at an upper portion on one side in the main case 10, and includes a power drawing part 31 configured to connect to the bus duct and an operation part 32 configured to perform a power drawing operation. The power drawing part 31 includes several second electrically conductive plates 311, several insulating plates 312and a fixation base 313. The second electrically conductive plate 311 is a bar-shaped electrically conductive copper plate. An upper end of the second electrically conductive plate 311 is formed by an inclined surface whose upper end bends outward, a vertical surface bending from the inclined surface, and a cambered surface bending from the vertical surface, and this bending surface is configured to increase the elasticity of the second electrically conductive plate and the reliability of the electrical connection, and a lower end of the second electrically conductive plate 311 has an L shape. L-shaped connection ends of respective second electrically conductive plates 311 are fixed to the fixation base 313. A front baffle is fixed at a front side of the fixation base 313. Upper ends of respective second electrically conductive plates 311 abut against elastic electrically conductive copper plates 314 on one side of the insulating plates 312.The elastic electrically conductive copper plate 314 is a curve-shaped plate formed by multiple bending surfaces. The elastic electrically conductive copper plate 314 is provided at an upper end thereof with a U-shaped cambered surface which abuts against the insulating plate 312, and a shape of the cambered surface of the elastic electrically conductive copper plate contributes to increasing elastic deformation when the second electrically conductive plates 311 are plugging into the first electrically conductive plates 53 and close contact after the second electrically conductive plates 311 are plugged into the first electrically conductive plates 53. Several second electrically conductive plates 311 of the power drawing part 31 are arranged in the width direction of the main case 10 to form a second electrically conductive plate assembly 31Awhich corresponds to the first electrically conductive plate assembly 53A in the bus duct. An upper end of the second electrically conductive plate assembly 31A extends out of the main case 10 from a window 11 in the upper portion of the main case, and is inserted into the first electrically conductive plate assembly 53A of the bus duct from the bottom of the bus duct, so that the second electrically conductive plate assembly 31A and the first electrically conductive plate assembly 53A are connected by plugging-in for power drawing. At this point, a second step of step-by-step power drawing is completed.

As shown in Fig. 4A to Fig. 4C and Fig. 4F to Fig. 4G, the operation part 32 includes a link mechanism 321, a connection base 322, an operation handle 323, a lifting rod 324, and a guiding post 325. The operation part 32 is connected to a lower side of the power drawing part 31, and is provided with the link mechanism 321which drives the power drawing part to move vertically. The link mechanism 321 includes one driving link 3211 and two pairs of driven links 3212, 3213. The driving link 3211 is a multi-arm link with three arms, and a first arm 3211A is fixedly connected to the operation handle 323and is configured to rotate around a first pin shaft 3214 fixed to a side wall of the connection base 322. The second arm 3211B is positioned in a limiting groove 3221 at a top of the connection base, and is configured to limit lateral movement of the driving link 3211. An end of the third arm 3211C is articulated to the two pairs of driven links 3212, 3213 via a second pin shaft 3215. Each of the two pairs of driven links 3212, 3213 consists of two front-back symmetric links. The other end of the driven link 3212is articulated to a third pin shaft 3216. The other end of the driven link 3213 is articulated to the lifting rod 324 of the operation part. The link mechanism 321 is connected to the connection base 322 which is fixed to a side wall of the main case. An input end of the link mechanism 321 is connected to the operation handle 323, and a body of the operation handle 323 extends to an exterior of the main case 10. An output end of the link mechanism 321 is connected to the vertical lifting rod 324, and an upper end of the lifting rod 324 is fixed to a support 315. Two guiding posts 325 are fixed on the support 315 of the power drawing part, and lower ends of the two guiding posts 325 are fixed to a support plate 326 which is connected to a side wall of the main case 10. Two guiding posts 325 extend upward and enter the support 315, and the support 315 is movable vertically along the two guiding posts 325 under the action of the lifting rod 324, so that the second electrically conductive plate assembly 31A is plugged into the first electrically conductive plate assembly 53A in the bus duct for power drawing or is disconnected from the first electrically conductive plate assembly 53A in the bus duct. When the operation handle 323 is pressed down or lifted up, the link mechanism 321 moves the lifting rod 324 vertically by pushing, so that the second electrically conductive plate assembly 31A of the power drawing mechanism is plugged into the first electrically conductive plate assembly 53A in the bus duct for power drawing or is disconnected from the first electrically conductive plate assembly 53A in the bus duct.

When step-by-step power drawing is performed, firstly the step-by-step power drawing mechanism 30 is clamped to the bottom of the bus duct 50 via the snap-fit mechanism 20. After clamping is completed, the second electrically conductive plate assembly 31A of the step-by-step power drawing mechanism is positioned under the first electrically conductive plate assembly 53A of the bus duct. When the operation handle 323 of the step-by-step power drawing mechanism is pressed down, the second electrically conductive plate assembly 31A moves upward under the driving of the link mechanism 321 and is inserted into the first electrically conductive plate assembly 53A of the bus duct, so that respective second electrically conductive plates 311 of the second electrically conductive plate assembly 31A closely contact with and are electrically connected to respective first electrically conductive plates 53 of the first electrically conductive plate assembly 53A, thereby realizing power drawing by the step-by-step power drawing mechanism 30 from the bus duct. If disconnection is needed, it is only required to lift up the operation handle 323.

As shown in Fig. 6, the control mechanism 40 includes a control unit 41, a power drawing unit 42, an output unit 43, and a monitoring module44. The monitoring module44 is integrated with a switching power supply 441, a current collection unit 442, a voltage collection unit 443, a monitoring unit 444, a communication interface unit 445, and a display screen 446. The control unit 41 is a circuit breaker, which is configured to distribute electric energy from the bus duct and to connect or disconnect a circuit between an electrical device and a bus duct, so as to protect the power distribution system. When serious overload or a failure occurs in the circuit, the circuit is interrupted automatically, so as to ensure usage safety of the bus ductanda step-by-step power drawing device. The control unit 41 is electrically connected to the power drawing unit 42 and the output unit 43 respectively, and the power drawing unit 42 is electrically connected to the second electrically conductive plate assembly 31A of the power drawing part 31. The output unit 43 is electrically connected to the power socket 61 or the industrial electrical connector 62.Theswitching power supply 441 is connected between the power drawing unit 42 and the control unit 41. The current collection unit 442 and the voltage collection unit 443 are connected between the control unit 41 and the output unit 43, and the current collection unit 442 and the voltage collection unit 443 are respectively a current sensor and a voltage sensor, which are respectively electrically connected to the power drawing part 31 of the step-by-step power drawing mechanism 30 and are configured to collect real-time data of the current and voltage of the power drawing unit 42. The current collection unit 442 and the voltage collection unit 443 are respectively connected to the monitoring unit 444, and the monitoring unit 444 is a single chip, which is connected to the switching power supply 441, the communication interface unit 445, and the display screen 446respectively. The monitoring unit 444analyzes and processes monitored data of the current and voltage and converts the data into data of power, electric energy, temperature and the like, and sends signals to the switching power supply 441, the communication interface unit 445, and the display screen 446 respectively.

Thereby, the power distribution apparatus allowing for step-by-step power drawing is provided with a step-by-step power drawing mechanism allowing for step-by-step power drawing, which may be clamped to a bus duct quickly by a snap-fit mechanism, may be operated to draw power from the bus duct, may safely distribute obtained electric energy to an electrical device, and may also perform effective safety control on a power drawing and outputting process, and thus a safe, efficient power distribution system can be provided to electrical devices such as a PDU.

Although the present disclosure is explained through the above embodiments, the protection scope of the present disclosure is not limited thereto, and deformations, replacements and the like made on the above components, without departing from the inventive concept of the present disclosure, all fall into the scope of claims of the present disclosure.

## Claims

1. A power distribution apparatus allowing for step-by-step power drawing, **characterized in that**, the power distribution apparatus is provided with: a main case (10), a step-by-step power drawing mechanism (30)and a control mechanism (40) which are disposed in the main case (10), a snap-fit mechanism (20) which is disposed at an outer side of the main case (10), and a bus duct (50) to which the main case (10) is clamped via the snap-fit mechanism (20), wherein the step-by-step power drawing mechanism (30) is connected to the bus duct (50) for power drawing and is electrically connected to an electrical device via multiple power sockets (61) or industrial electrical connectors (62) for power outputting, and the control mechanism (40) is electrically connected to the step-by-step power drawing mechanism (30) to perform safety control on a power drawing and outputting process.

2. The power distribution apparatus allowing for step-by-step power drawing according to claim 1, **characterized in that**, a concealed power socket (61) configured to connect the electrical device is disposed on a front panel of the main case (10) and is concealed at a back side of an openable and closable outer cover (611), and the main case (10) is provided at a top thereof with a window (11) for an upper end of the step-by-step power drawing mechanism (30) to extend out.

3. The power distribution apparatus allowing for step-by-step power drawing according to claim 1, **characterized in that**, the bus duct (50) is provided with a duct body (51), two ends and a bottom of which are open, wherein a protruding edge (511), configured to connect with the snap-fit mechanism(20), is provided at an outer side of the duct body (51) in a length direction, and several insulating sheaths (52)are disposed at an interval in the duct body (51) in a width direction, wherein one first electrically conductive plate (53)is disposed in each insulating sheath (52), and multiple first electrically conductive plates (53) are arranged to form a first electrically conductive plate assembly (53A), with two ends of the first electrically conductive plates (53) extending beyond two ends of the insulating sheath (52).

4. The power distribution apparatus allowing for step-by-step power drawing according to claim 1, **characterized in that**, the snap-fit mechanism (20) is provided with two snap-fit boxes (21) which are symmetrically fixed on upper ends of two sides of the main case (10), wherein each of the two snap-fit boxes (21) is provided therein with a first claw groove (211), a second claw groove (212), and a spring groove (213)and is provided with a first claw (22) and a second claw (23)which are extendable and retractable, are symmetrically disposed at two sides in a width direction, and are respectively connected to a first return spring (24); wherein the snap-fit box (21) is provided, at a lower portion, with a first claw opening and closing key (25) and a second claw opening and closing key (26)which are symmetrically disposed and are movable laterally, and are respectively provided thereon with a first guiding groove (251) and a second guiding groove (261); and wherein the snap-fit box (21) is provided, at two sides, with claw release buttons (27) which are movable vertically and are provided thereon with first limiting protrusions (271, 272), and second limiting protrusions (221, 231), which cooperate with the first limiting protrusions (271, 272) for limiting, are respectively disposed on the first claw (22) and the second claw (23).

5. The power distribution apparatus allowing for step-by-step power drawing according to claim 4, **characterized in that**, the first claw (22) and the second claw (23) are respectively disposed in the first claw groove (211) and the second claw groove (212) in the two snap-fit boxes (21), and the first return spring (24) is disposed in the spring groove (213); the first claw (22) and the second claw (23) have an inverted L-shape and are provided at an end with vertical protrusions (222, 232) and lateral protrusions (223, 233) which are formed by bending at a right angle, and the vertical protrusions (222, 232) are respectively inserted into the first guiding groove (251) and the second guiding groove (261) on the first claw opening and closing key (25) and the second claw opening and closing key (26); the first guiding groove (251)and the second guiding groove (261) each have a length that is greater than a length of each of the vertical protrusions(222, 232) of the first claw and the second claw, so that the vertical protrusions(222, 232)are respectively movable in the first guiding groove (251)and the second guiding groove (261) to move the first claw (22) and the second claw (23) by pushing; the two lateral protrusions (223, 233) are positioned at two ends of the spring groove (213), and two ends of the first return spring (24) are connected to the two lateral protrusions (223, 233); and free ends of the first claw (22) and the second claw (23)extend beyond the snap-fit box(21), and hooks (224, 234) bending inward are respectively disposed at end portions of the free ends.

6. The power distribution apparatus allowing for step-by-step power drawing according to claim 5, **characterized in that**, the first claw opening and closing key (25) and the second claw opening and closing key (26) are symmetrically disposed in notches at two sides of a lower portion of the snap-fit box(21), and are separated by a partition plate (214) in the middle; a second return spring (28) is mounted in a spring hole (2141) in the partition plate, and two ends of the second return spring (28) are respectively connected to the first claw opening and closing key (25) and the second claw opening and closing key (26); when the first claw opening and closing key (25) and the second claw opening and closing key (26) are pushed inward, the first claw (22) and the second claw (23) extend outward; and by placing the first claw (22) and the second claw (23) on the protruding edge (511) of the bus duct and releasing the first claw opening and closing key (25) and the second claw opening and closing key (26), the hooks (224, 234) may be locked on the protruding edge (511).

7. The power distribution apparatus allowing for step-by-step power drawing according to claim 3, **characterized in that**, the step-by-step power drawing mechanism (30) is disposed at an upper portion on one side in the main case (10), and includes a power drawing part (31) configured to connect to the bus duct and an operation part (32) configured to perform a power drawing operation.

8. The power distribution apparatus allowing for step-by-step power drawing according to claim 7, **characterized in that**, the power drawing part (31) includes several second electrically conductive plates (311), several insulating plates (312) and a fixation base (313), wherein the several second electrically conductive plates (311) are connected to multiple insulating plates (312), and upper ends of the second electrically conductive plates (311) abut against elastic electrically conductive copper plates (314)on one side of the insulating plates (312); several second electrically conductive plates (311) and the elastic electrically conductive copper plates (314) are arranged in a width direction of the main case (10) to form a second electrically conductive plate assembly (31A) which corresponds to the first electrically conductive plate assembly (53A) in the bus duct; the second electrically conductive plate assembly (31A), the multiple insulating plates (312), and multiple elastic electrically conductive copper plates (314) are disposed on the fixation base (313), and the fixation base (313) is disposed on a support (315) connected to the main case; and an upper end of the second electrically conductive plate assembly (31A) extends out of the main case (10).

9. The power distribution apparatus allowing for step-by-step power drawing according to claim 7, **characterized in that**, the operation part (32) is connected to a lower side of the power drawing part (31)and is provided with a link mechanism(321) which drives the power drawing part to move vertically; the link mechanism (321) is connected to a connection base (322) which is fixed to a side wall of the main case; an input end of the link mechanism (321) is connected to the operation handle (323), and a body of the operation handle (323) extends to an exterior of the main case (10);an output end of the link mechanism (321) is connected to a vertical lifting rod (324), and an upper end of the lifting rod (324) is fixed to the support (315); two guiding posts (325) are fixed on the support (315), and the two guiding posts (325) extend upward and enter the support (315); and the support (315) is movable vertically along the two guiding posts(325)under the action of the lifting rod (324), so that the second electrically conductive plate assembly (31A) is plugged into the first electrically conductive plate assembly (53A) in the bus duct for power drawing or is disconnected from the first electrically conductive plate assembly (53A) in the bus duct.

10. The power distribution apparatus allowing for step-by-step power drawing according to claim 9, **characterized in that**, the link mechanism (321) includes one driving link (3211) and two pairs of driven links (3212, 3213), wherein the driving link (3211) includes three arms, wherein a first arm (3211A) thereof is articulated to the operation handle (323) and is configured to rotate around a first pin shaft (3214) fixed to a side wall of the connection base (322), a second arm (3211B) is positioned in a limiting groove (3221) at a top of the connection base, and an end of a third arm (3211C) is articulated to the two pairs of driven links (3212, 3213) via a second pin shaft (3215); an end of the driven link (3212) is articulated to a third pin shaft (3216), and the other end of the driven link (3213) is articulated to the lifting rod (324) of the operation part; and when the operation handle (323) is pressed down or lifted up, the link mechanism (321) moves the lifting rod (324) vertically by pushing, so that the second electrically conductive plate assembly (31A) of the power drawing mechanism is plugged into the first electrically conductive plate assembly (53A) in the bus duct for power drawing or is disconnected from the first electrically conductive plate assembly (53A) in the bus duct.

11. The power distribution apparatus allowing for step-by-step power drawing according to claim 1, **characterized in that**, the control mechanism (40) includes a control unit (41), a power drawing unit (42), an output unit (43), and a monitoring module(44), wherein the monitoring module(44) is integrated with a switching power supply(441), a current collection unit (442), a voltage collection unit (443), a monitoring unit (444), a communication interface unit (445), and a display screen (446); the control unit (41) is a circuit breaker, which is connected to the power drawing unit (42) and the output unit (43); the power drawing unit (42) is electrically connected to the power drawing part (31) of the step-by-step power drawing mechanism; the output unit (43) is electrically connected to the power socket (61) or the industrial electrical connector (62); the switching power supply(441) is connected between the power drawing unit (42) and the control unit (41);the current collection unit (442) and the voltage collection unit (443) are connected between the control unit (41) and the output unit (43), and the current collection unit (442) and the voltage collection unit (443) are respectively electrically connected to the power drawing part (31) of the step-by-step power drawing mechanism and are further respectively electrically connected to the monitoring unit (444); and the monitoring unit (444) is a single chip, which is connected to the switching power supply (441), the communication interface unit (445), and the display screen (446) respectively.
